(19) Europäisches Patentamt
European Patent Office
Office européen des brevets

(11) Veröffentlichungsnummer: **0 483 188 B1**

(12) **EUROPÄISCHE PATENTSCHRIFT**

(45) Veröffentlichungstag der Patentschrift: **04.05.94**

(51) Int. Cl.[5]: **G01L 23/10**, G01L 19/00

(21) Anmeldenummer: **90910572.8**

(22) Anmeldetag: **27.07.90**

(86) Internationale Anmeldenummer:
**PCT/DE90/00582**

(87) Internationale Veröffentlichungsnummer:
**WO 91/19966 (26.12.91 91/29)**

# (54) DRUCK- UND WÄRMEFLUSS-SENSOR FÜR DEN VERBRENNUNGSRAUM VON VERBRENNUNGSMOTOREN.

(30) Priorität: **27.07.89 DE 3924949**

(43) Veröffentlichungstag der Anmeldung:
**06.05.92 Patentblatt 92/19**

(45) Bekanntmachung des Hinweises auf die Patenterteilung:
**04.05.94 Patentblatt 94/18**

(84) Benannte Vertragsstaaten:
**DE FR GB IT**

(56) Entgegenhaltungen:
**DE-A- 2 064 395**
**DE-A- 3 727 221**
**US-A- 4 299 117**

(73) Patentinhaber: **SIEMENS AKTIENGESELLSCHAFT**
**Wittelsbacherplatz 2**
**D-80333 München(DE)**

(72) Erfinder: **Kleinschmidt, Peter**
**Klagenfurterstr. 12**
**D-8000 München 80(DE)**
Erfinder: **Meixner, Hans, Dr.**
**Max-Planck-Str. 5**
**D-8013 Haar(DE)**
Erfinder: **Mock, Randolf**
**Emil-Geis-Str. 9**
**D-8000 München 70(DE)**
Erfinder: **Winter, Hans**
**Angerstr. 36**
**D-8011 Höhenkirchen-Siegertsbrunn(DE)**

EP 0 483 188 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Vorliegende Erfindung bezieht sich auf einen Sensor zur Messung sowohl des Verbrennungsdrukkes als auch des Wärmeflusses im Verbrennungsraum eines Verbrennungsmotors für insbesondere Kraftfahrzeuge. Neben dem Verbrennungsdruck interessiert als weitere thermodynamische Größe der Wärmefluß durch den Motorblock sowie die Gastemperatur im Verbrennungsraum. Diese Größen sollen erfaßt werden. Da die Möglichkeit, im Motorblock noch zusätzliche Bohrungen für zusätzliche Sensoren anzubringen stark eingeschränkt ist, wird nach einer das anstehende Problem lösenden Lehre zum technischen Handeln gesucht. Die mit dem Anspruch 1 angegebene technische Lehre löst das obengenannte Problem. Der Erfindung liegt zugrunde, den Wärmefluß-Sensor in den vorgesehenen Drucksensor zu integrieren, der in den Verbrennungsraum des Motors hineinragt. Die Erfindung bezieht sich dabei, jedoch nicht einschränkend, in spezieller Weise auf Drucksensoren, wie sie aus den deutschen Offenlegungsschriften DE-OS 3 714 131 und 3 727 221 bekannt sind.

Diese bekannten Drucksensoren haben als hier besonders interessierende Teile eine Membran, deren eine Seite den Verbrennungsraum des Motors begrenzt und an deren gegenüberliegender Membranoberfläche ein Stößel oder dergleichen anliegt, so daß von dieser Membranoberfläche der auf der anderen Seite der Membran herrschende Druck als Kraft auf ein Sensorelement des Drucksensors übertragen werden kann. Dieses Sensorelement ist insbesondere ein piezoelektrischer Sensor, vorzugsweise in der Form einer zu biegenden Platte oder eines in Axialrichtung mit dem Druck zu belastenden Röhrchens aus Piezomaterial. Insbesondere kommt Piezokeramik wie Bleizirkonattitanat und dergleichen als piezoelektrisches Material zur Anwendung. Dieses Material ist preiswert und technisch hoch entwickelt.

Erfindungsgemäß ist vorgesehen, den Thermosensor der vorliegenden Erfindung an der, bezogen auf den Drucksensor, inneren Membranoberfläche anzubringen und zwar in gutem Wärmekontakt mit der Membran. Damit wird dieser Temperatursensor nahezu direkt der Hitze der Verbrennungsgase ausgesetzt, die die gegenüberliegende wiederbezogen auf den Drucksensor, äußere Membranoberfläche umspülen.

Der erfindungsgemäße Wärmefluß-Sensor besteht aus zwei Temperaturfühlern und, wie dies die beigefügte Figur einer besonders bevorzugten integrierten Ausführungsform der Erfindung zeigt. Der Drucksensor ist in dieser Figur nur prinzipiell dargestellt und mit 11 ist die Membran, mit 12 das in den Motorblock einzusetzende Drucksensor-Gehäuse, mit 13 das piezoelektrische Röhrchen und mit 14 das Widerlager des Drucksensors bezeichnet. Mit 15 ist der eine Pol für das elektrische Drucksensorsignal bezeichnet, wobei beim vorliegenden Ausführungsbeispiel das Widerlager 14 der zweite Pol ist. Mit 16 und 17 sind Anschlußdurchführungen für die Zuleitungen zum erfindungsgemäß vorgesehenen Wärmefluß-Sensor 21 bezeichnet.

Aus der DE-OS 2 064 395 sind zusätzliche Einzelheiten bekannt, wie ein Wärmefluß-Sensor für sich genommen praktisch ausgeführt sein kann und auf welche Details es dabei ankommt. Insbesondere sind dort nähere Angaben über spezielle Ausführungen der Temperaturmesser bzw. der Thermoelemente und deren Schaltung zu entnehmen.

Wie aus der Figur ersichtlich ist, ist dieser Wärmefluß-Sensor 21 mit seiner einen Scheibe 22 temperaturmäßig eng mit der Membran 11 gekoppelt. Die zweite Scheibe 24 des Temperatur-Sensors ist vorzugsweise mit einem Teil thermisch gekoppelt, das die Eigenschaft hat, diese zweite Scheibe 24 mit einer Wärmesenke zu koppeln. Das wärmeleitende Teil kann ein z.B. kupferner Wärmeleiter 50 sein. Dieser Wärmeleiter kann auch die Funktion als elektrische Zuleitung zu äußeren Elektrode der Scheibe 24 sein. Es kann auch der Innenraum des Röhrchens 13 mit einem wärmeableitenden Material derart gefüllt sein, daß die Wärmeabfuhr aus der Scheibe 24 bewirkt ist. Es ist jedoch darauf zu achten, daß nicht unnötigerweise Wärme auf das piezoelektrische Röhrchen 13 übertragen wird. Die Wärmesenke entspricht im wesentlichen dem Kühlwasser des Motors. Dieses liefert die Bezugsgröße für die Verbrennungsmotoren.

Zwischen den Scheiben 22 und 24 des Wärmefluß-Sensors baut sich ein Temperaturgefälle auf. Dies ist umso größer je geringer die thermische Leitfähigkeit einer dritten Scheibe 23 des Wärmeflußsensors ist, nämlich der Scheibe 23, die als Wärmebarriere vorgesehen ist.

Für den Aufbau eines erfindungsgemäßen kombinierten Druck- und Wärmeflußsensors ist es wichtig, dafür Sorge zu tragen, daß von dem Drucksensor bzw. dessen System möglichst wenig Wärme "rückwärts" auf den Wärmeflußsensor gelangt. Der Wärmeflußsensor soll nur in der Richtung von der Scheibe 22 zur Scheibe 24 Wärmefluß aufweisen. Ein solcher Wärmeflußsensor hat z.B. eine Dicke von 20 $\mu$m.

Mißt man mittels der Scheiben 22 und 24 die Temperaturen $T_1$ und $T_2$ zu beiden Seiten der Wärmebarriere (Scheibe 23), so ergibt sich die Wärmeflußdichte über die Wärmebarriere zu:

$$\frac{dQw}{dt} = \frac{w}{dw} (T_2 - T_1) \quad (1)$$

Dabei ist w die thermische Leitfähigkeit der Wärmebarriere 23 und dw deren Dicke. Die Wärmeflußdichte senkrecht durch die Membran ist:

$$\frac{dQm}{dt} = \frac{M}{dM} (T_1 - T_M) \quad (2)$$

TM bezeichnet die Temperatur der (äußeren) Membranoberfläche, die dem Brennraum zugewandt ist, M die thermische Leitfähigkeit der Membran 11 und dM deren Dicke. Da wegen der geringen Dicke der Membran 11 der Wärmefluß in der Ebene der Membran klein gegenüber dem Fluß senkrecht zur Membranebene ist, gilt:

$$\frac{dQm}{dt} = \frac{dQw}{dt} \quad (3)$$

Der auf die Fläche normierte Wärmefluß aus dem Verbrennungsgas in die Membran hinein ist gegeben zu:

$$\frac{dQG}{dt} = a\ (T_G - T_M) \quad (4)$$

Hierbei ist a der Wärmeübergangskoeffizient vom Verbrennungsgas zur Motorwand und $T_G$ die Temperatur des Verbrennungsgases. Kombination der Gleichungen 2 und 4 ergibt unter Berücksichtigung von (3):

$$\frac{M}{dw} (T_2 - T_2) = a\ (T_G - T_M) \quad (5)$$

Da der Wärmeübergangskoeffizient stark nichtlinear mit dem Druck und der Temperatur variiert, wird er als Kennfeld abgelegt. Mit Hilfe von Gleichung 5 lassen sich bei bekanntem Wärmeübergangskoeffizienten die Temperatur des Verbrennungsgases sowie der Wärmefluß aus dem Gas in den Brennraumwand bestimmen.

Die Figur zeigt eine besonders einfache Variante eines erfindungsgemäßen Wärmefluß-Sensors, der auf die Membran 11 aufgebracht ist. Man hat damit die Möglichkeit, die Temperatur der Brennraumwand zu bestimmen.

**Patentansprüche**

**1.** Sensor für im Verbrennungsraum eines Verbrennungsmotors herrschende physikalische Größen, ausgebildet als Drucksensor mit einem Druck-Sensorelement (13) in einem Gehäuse (12), das als einen Anteil seiner Wand eine Druckmembran (11) aufweist, die im in dem Motor eingesetztem Zustand des Sensors den Gehäuseinnenraum gegenüber dem Verbrennungsraum trennt,
**gekennzeichnet dadurch,**
- daß der Sensor einen im Gehäuse (12) integrierten Wärmeflußsensor (21) umfaßt,
- der in Wärmekontakt mit der inneren Oberfläche der Membran (11) im Gehäuseinneren angeordnet ist,
- daß der Wärmeflußsensor (21) einen Aufbau mit einem ersten und mit einem zweiten Temperaturfühler (22,24) hat
- daß der erste Temperaturfühler (22) den Wärmekontakt mit der Membran (11) hat und zwischen diesem ersten Temperaturfühler (22) und dem zweiten Temperaturfühler (24) eine Wärmebarriere (23) vorhanden ist, durch die hindurch ein Wärmefluß von dem ersten Temperaturfühler (22) zu

dem anderen Temperaturfühler (24) vorliegt und
- daß der zweite Temperaturfühler in wärmeleitendem Kontakt mit dem Kühlmedium des Motors als Bezugsgröße für die Temperatur des Verbrennungsgases steht.

**2.** Sensor nach Anspruch 1,
**gekennzeichnet dadurch,**
daß der Drucksensor ein piezoelektrisches Sensorelement (13) besitzt.

**3.** Sensor nach Anspruch 1 oder 2,
**gekennzeichnet dadurch,**
daß die Wärmebarriere eine Scheibe (23) ist.

**4.** Sensor nach Anspruch 1, 2 oder 3,
**gekennzeichnet dadurch,**
daß die Wärmebarriere (23) aus Siliziumdioxid, -nitrid besteht.

**5.** Sensor nach einem der Ansprüche 1 bis 4,
**gekennzeichnet dadurch,**
daß ein am Wärmefluß-Sensor (21) anliegender Wärmeleiter (50) vorgesehen ist, dessen der Anlagestelle (24) gegenüberliegenden Ende mit einer Wärmesenke (14) verbunden ist.

**Claims**

**1.** Sensor for the physical variables prevailing in the combustion chamber of an internal combustion engine, constructed as a pressure sensor having a pressure sensor element (13) in a housing (12) which has a pressure diaphragm (11) as a portion of its wall, which diaphragm separates the interior of the housing from the combustion chamber when the sensor is introduced in the engine,
characterised in that
- the sensor comprises a heat-flow sensor (21) which is integrated in the housing (12),
- which heat-flow sensor is arranged in heat-contact inside the housing with the internal surface of the diaphragm (11),
- the heat-flow sensor (21) is designed with a first and with a second temperature sensor (22, 24),
- the first temperature sensor (22) is in heat-contact with the diaphragm (11) and between said first temperature sensor (22) and the second temperature sensor (24) a heat barrier (23) is present, through which a heat flow occurs from the first temperature sensor (22) to the other temperature sensor (24) and
- the second temperature sensor is in heat-conducting contact with the cooling agent of the engine as a reference variable for the temperature of the combustion gas.

**2.** Sensor according to Claim 1, characterised in that the pressure sensor has a piezoelectric sensor element (13).

**3.** Sensor according to Claim 1 or 2, characterised in that the heat barrier is a plate (23).

**4.** Sensor according to Claims 1, 2 or 3, characterised in that the heat barrier (23) consists of silicon dioxide or silicon nitride.

**5.** Sensor according to one of Claims 1 to 4, characterised in that a heat conductor (50) resting against the heat-flow sensor (21) is provided whose end opposite the abutment point (24) is connected to a heat sink (14).

**Revendications**

**1.** Capteur de grandeurs physiques régnant dans la chambre de combustion d'un moteur à combustion interne, jouant le rôle de capteur de pression au moyen d'un élément capteur de pression (13) logé dans une enveloppe (12) qui présente, en tant que partie de sa paroi, une membrane de pression (11) qui sépare l'intérieur de l'enveloppe de la chambre de combustion, lorsque le capteur est mis en place dans le moteur, caractérisé

- en ce que le capteur comprend un capteur (21) de flux calorifique intégré dans l'enveloppe (12),
- qui est en contact thermique avec la surface intérieure de la membrane (11) à l'intérieur de l'enveloppe,
  - en ce que le capteur de flux calorifique (21) a une structure comportant une première sonde de température et une seconde sonde de température (22, 24),
  - en ce que la première sonde de température (22) est en contact thermique avec la membrane (11) et qu'entre cette première sonde de température (22) et la seconde sonde de température (24) est présente une barrière thermique (23) à travers laquelle un flux calorifique passe de la première sonde de température (22) à l'autre sonde de température (24)
- et en ce que la seconde sonde de température est en contact, avec conductibilité thermique, avec le fluide de refroidissement du moteur, servant comme grandeur de référence pour la température du gaz d'échappement.

**2.** Capteur selon la revendication 1,
caractérisé en ce que
le capteur de pression comporte un élément (13) de capteur du type piézoélectrique.

**3.** Capteur selon la revendication 1 ou 2,
caractérisé en ce que
la barrière thermique est un disque (23).

**4.** Capteur selon la revendication 1, 2 ou 3,
caractérisé en ce que la barrière thermique (23) est en dioxyde de silicium ou en nitrure de silicium.

**5.** Capteur selon l'une des revendications 1 à 4,
caractérisé en ce qu'
il est prévu un conducteur de chaleur (50) qui est appliqué sur le capteur (21) de flux calorifique et, dont l'extrémité à l'opposé du point (24) d'application est reliée à un puits (14) de chaleur.

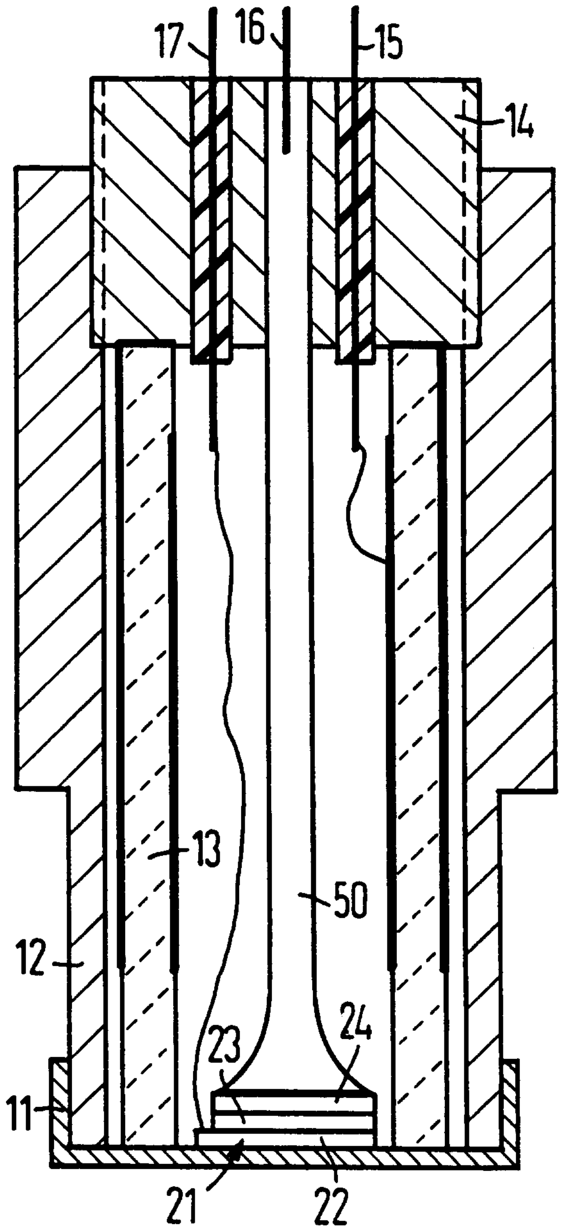
17
16
15
14
13
50
12
24
23
11
21
22